# DEMANDE DE BREVET EUROPEEN

(11) **EP 1 770 972 A1**
(43) Date de publication de la demande: **04.04.2007**
(21) Numéro de dépôt: 05300788.6
(22) Date de dépôt: 30.09.2005
(51) Int. Cl.: H04M 3/428, H04M 1/80

(54) **Procédé pour déterminer la source de musique de mise en attente par le terminal de communication mis en attente**

(71) Demandeur: Alcatel Lucent, 75008 Paris (FR)
(72) Inventeur: Litteaut, Jacques, 78160, Marly le Roi (FR); Coulon, Stéphane, 95810, Arronville (FR)
(74) Mandataire: Sciaux, Edmond

(57) **Abrégé**

Ce procédé permet de choisir entre un clip lu localement par un dispositif associé au terminal (Ta) de l'usager appelant, et un clip lu à distance par un dispositif associé au terminal de l'usager appelé (Tb), quand le premier terminal (Ta) est mis en attente par le second terminal (Tb). Il comporte une étape consistant à interroger le premier terminal (Ta) afin de déterminer si le clip doit être lu localement dans le réseau (PNa) auquel appartient le premier terminal (Ta), ou si le clip lu doit être lu à distance, dans le réseau (PNb) auquel appartient le second terminal (Tb).

## Description

L'invention concerne un procédé pour lire un clip personnalisé, quand un usager appelant est mis en attente. Un tel clip est destiné à faire patienter un usager d'un terminal, lorsqu'il appelle un autre terminal qui est occupé par une communication établie antérieurement, ou bien lorsque l'utilisateur de l'autre terminal interrompt provisoirement une communication avec le premier terminal, par exemple pour appeler un troisième terminal. Un clip est classiquement un extrait d'oeuvre musicale, mais il peut aussi être un message publicitaire, ou tout autre type d'information. Il peut être multimédia : audio, vidéo, texte, puisque des terminaux multimédia commencent à être utilisés pour établir des communications.

Il est souhaitable d'adapter le contenu d'un clip en fonction de la personne qui le reçoit. Par exemple, si le clip doit être un message publicitaire, il est souhaitable de sélectionner une publicité pour un produit qui a des chances d'intéresser l'usager qui est mis en attente. Un procédé connu consiste à identifier, aussi bien que possible, l'usager appelant. Le numéro d'abonné du terminal appelant permet, dans une certaine mesure, d'identifier l'usager appelant, en utilisant un annuaire inversé. En effet, le numéro d'abonné du terminal appelant est généralement transmis jusqu'au terminal appelé, sauf si l'usager appelant a demandé explicitement qu'il ne soit pas transmis. Cependant le terminal appelant peut être utilisé successivement par plusieurs personnes. Il ne permet donc pas d'identifier une personne, de manière sûre. D'autres part, si une même personne peut utiliser différents terminaux, il faut pouvoir associer le nom de cette personne à chacun des numéros correspondant respectivement à ces terminaux.

Le document US 6.842.767 décrit un portail vocal qui lit des clips audio adaptables en fonction du numéro de téléphone du terminal appelant, ou en fonction d'un profil d'usager, préalablement mémorisé dans une table, en association avec le numéro du terminal appelant : Le clip peut ainsi faire de la publicité pour un commerce situé dans la zone géographique correspondant aux premiers chiffres du numéro ; ou bien la langue utilisée dans le clip peut être sélectionnée en fonction de cette zone géographique, ou en fonction d'un profil d'usager. Un profil d'usager est constitué en posant des questions à l'usager considéré, ou bien en observant ses sujets d'intérêt.

Quand l'usager appelant est un employé d'une entreprise, moyenne ou grande, on peut envisager de le faire patienter en lui lisant un clip spécifique de cette entreprise, ce clip donnant par exemple des informations sur la vie de l'entreprise, ou sur la vie du service auquel appartient l'usager appelant, au lieu de lire un clip propre à l'entreprise où travaille usager appelé. C'est une autre façon de personnaliser le clip lu pendant une attente.

Le but de l'invention est de proposer un procédé pour personnaliser un clip en permettant de choisir entre un clip lu localement par un dispositif associé au terminal de l'usager appelant, et un clip lu à distance par un dispositif associé au terminal de l'usager appelé.

L'objet de l'invention est un procédé pour lire un clip personnalisé, quand un premier terminal est mis en attente par un second terminal, caractérisé en ce qu'il comporte une étape consistant à interroger le premier terminal afin de déterminer si le clip doit être lu localement dans le réseau auquel appartient le premier terminal, ou si le clip lu doit être lu à distance, dans le réseau auquel appartient le second terminal.

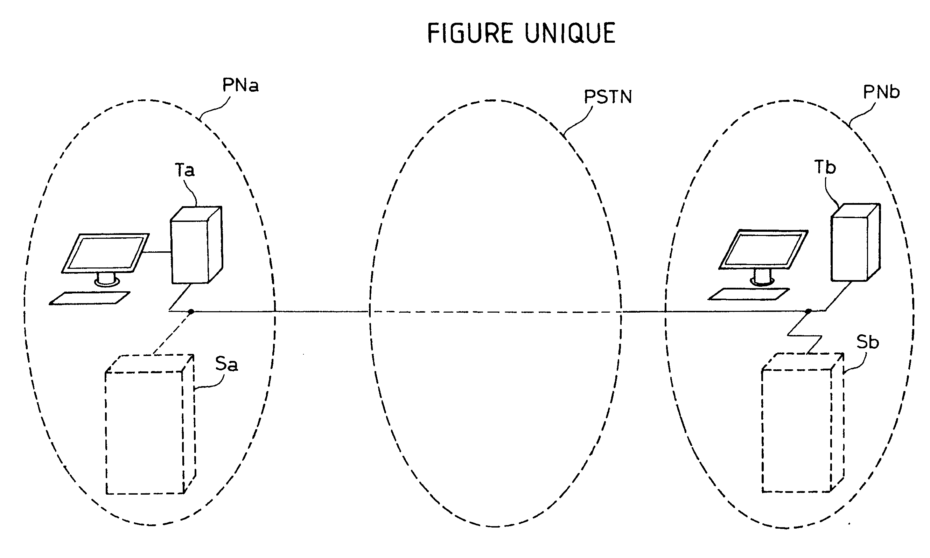

L'invention a aussi pour objet des terminaux pour la mise en oeuvre de ce procédé. Elle sera mieux comprise et d'autres caractéristiques apparaîtront à l'aide de la description ci-dessous et de la figure unique l'accompagnant.

La figure illustre un exemple de mise en oeuvre du procédé selon l'invention. Un premier usager utilise un terminal Ta, appartenant à un réseau privé PNa, pour une communication vidéo avec un autre usager utilisant un terminal Tb appartenant à un réseau privé Tb. Typiquement, ces deux réseau privés sont des réseaux d'entreprises. Ils sont reliés par un réseau public de télécommunication, PSTN. Les terminaux Ta et Tb sont par exemple des ordinateurs personnels comportant chacun deux hauts-parleurs, un microphone, une caméra vidéo, et des logiciels permettant d'établir une communication vidéo, de manière classique. Ils comportent en outre des moyens logiciels pour mettre en oeuvre le procédé selon l'invention.

Par exemple, les deux usagers sont en communication, et, à un moment donné, l'usager du terminal Tb met en attente l'usager du terminal Ta, en activant une fonction du logiciel de communication vidéo exécuté sur le terminal Tb. Le terminal Tb envoie alors au terminal Ta un message de signalisation qui lui indique que ce terminal Ta est mis en attente. Le terminal Ta envoie au terminal Tb un message de signalisation qui lui indique le type de mise en attente à appliquer pour ce terminal Tb, afin de personnaliser le clip lu pendant cette attente. L'utilisateur du terminal Tb, ou un administrateur du réseau PNa, a défini préalablement un type de mise en attente, en sélectionnant l'une des trois options suivantes :
-- 1) un clip lu localement par le terminal Ta de l'usager mis en attente,
-- 2) un clip lu localement par un serveur Sa appartenant au même réseau privé PNa que le terminal Ta,
-- 3) un clip lu à distance du terminal Ta, c'est à dire lu par le terminal Tb ou par un serveur Sb appartenant au réseau PNb du terminal Tb.

Ainsi le clip est personnalisé: dans le premier cas, c'est un clip vidéo choisie selon la fantaisie de l'usager du terminal Ta ; dans le deuxième cas, c'est un clip choisi par l'entreprise qui emploie l'usager du terminal Ta ; et dans le troisième cas, c'est un clip choisi par l'entreprise qui emploie l'usager du terminal Tb.

Le mode de fonctionnement consécutif à la mise en attente dépend du type de mise en attente :

### Premier mode de fonctionnement correspondant à l'option 1 :

Le terminal Ta lit un clip qui a été préalablement stocké sur ce terminal Ta. Il le lit jusqu'à ce que le terminal Tb envoie au terminal Ta un message de signalisation qui lui indique que ce terminal Ta est remis en communication avec le terminal Tb. Le terminal Ta arrête alors la lecture du clip, et envoie au terminal Tb un message de signalisation, qui lui indique que la lecture du clip est interrompue. La communication entre les deux terminaux Ta et Tb est rétablie.

### Deuxième mode de fonctionnement correspondant à l'option 2 :

Le terminal Ta commande au serveur Sa la lecture d'un clip qui a été préalablement stocké sur ce serveur Sa, ce serveur Sa appartenant PNa comme le terminal Ta. Ce serveur Sa remplit cette fonction de lecteur de clips pour tous les terminaux du réseau privé PNa. Ce clip est lu jusqu'à ce que le terminal Tb envoie au terminal Ta un message de signalisation, qui lui indique que ce terminal Ta est remis en communication avec le terminal Tb. Le terminal Ta commande alors au serveur Ta l'arrêt de la lecture du clip, et il envoie au terminal Tb un message de signalisation qui lui indique que la lecture du clip est interrompue. La communication entre les deux terminaux Ta et Tb est rétablie.

### Troisième mode de fonctionnement correspondant à l'option 3 :

Selon une première variante, le terminal Tb lit un clip qui a été préalablement stocké sur ce terminal Tb. Il lit jusqu'à ce que l'utilisateur du terminal Tb annule la mise en attente. Le terminal Tb envoie alors au terminal Ta un message de signalisation qui lui indique que l'attente est terminée. Le terminal Ta est remis en communication avec le terminal Tb.

Selon une seconde variante de mise en oeuvre, le terminal Tb commande au serveur Sb la lecture d'un clip qui a été préalablement stocké sur ce serveur Sb, ce serveur Sb appartenant au réseau privé PNb comme le terminal Tb. Ce serveur Sb remplit cette fonction de lecteur de clips pour tous les terminaux du réseau privé PNb. Ce clip est lu jusqu'à ce que l'utilisateur du terminal Tb annule la mise en attente. Le terminal Tb envoie alors au terminal Ta un message de signalisation qui lui indique que l'attente est terminée. La communication entre les deux terminaux Ta et Tb est rétablie.

Un perfectionnement à ce troisième mode de fonctionnement consiste à sélectionner un clip parmi plusieurs clips stockés dans le terminal Tb ou dans le serveur Sb, en fonction d'un profil utilisateur qui est lu dans une table à une adresse correspondant à l'identité de l'utilisateur Ta. Ceci permet de personnaliser le contenu du clip, en plus du choix du lecteur de clip. Cette table peut être stockée dans le terminal Tb ou le serveur Sb.

Le mode de fonctionnement est analogue si l'usager du terminal Ta est mis en attente, parce que le terminal Tb est déjà occupé par une autre communication, au moment où le terminal Ta demande l'établissement d'une communication.

Pour mettre en oeuvre le premier mode de fonctionnement, le terminal de Ta comporte des moyens logiciels pour :
- stocker une option prédéterminée, à appliquer lorsque ce terminal Ta est mis en attente par un autre terminal tel que Tb, cette option pouvant être qu'un clip doit être lu localement dans ce terminal Ta, ou qu'un clip doit être lu à distance, dans le réseau PNb auquel appartient un autre terminal qui met en attente le terminal considéré Ta ;
- recevoir un message lui indiquant qu'il est mis en attente ;
- répondre à ce message en indiquant l'option prédéterminée stockée dans ce terminal Ta ;
- et lire localement un clip dans ce terminal Ta, si l'option prédéterminée est qu'un clip doit être lu localement dans ce terminal Ta.

Pour mettre en oeuvre le deuxième mode de fonctionnement, le terminal de Ta comporte des moyens logiciels pour :
- stocker une option prédéterminée, à appliquer lorsque ce terminal Ta est mis en attente par un autre terminal tel que Tb, cette option pouvant être qu'un clip doit être lu localement dans cet autre terminal Ta, ou qu'un clip doit être lu à distance, dans le réseau auquel appartient cet autre terminal qui met en attente le terminal considéré Ta ;
- des moyens pour recevoir un message lui indiquant qu'il est mis en attente ;
- des moyens pour puis répondre à ce message en indiquant l'option prédéterminée stockée dans ce terminal Ta ;
- et des moyens pour commander la lecture d'un clip dans un serveur Sa appartenant au même réseau que ce terminal Ta, si l'option prédéterminée indique qu'un clip doit être lu localement dans le réseau PNa auquel appartient ce terminal Ta.

Pour mettre en oeuvre le troisième mode de fonctionnement, première variante, le terminal de Tb comporte des moyens logiciels pour :
- envoyer à un autre terminal, tel que Ta, un message lui indiquant que cet autre terminal Ta est mis en attente ;
- des moyens pour recevoir une réponse indiquant une option prédéterminée stockée dans cet autre terminal Tb, à appliquer lorsque ce terminal Ta est mis en attente, cette option pouvant être qu'un clip doit être lu localement dans cet autre terminal Ta, ou qu'un clip doit être lu à distance, dans le réseau auquel appartient cet autre terminal Tb qui met en attente le terminal considéré Ta ;
- et des moyens pour lire un clip dans ce terminal Tb, si l'option prédéterminée est qu'un clip doit être lu à distance, dans le réseau auquel appartient le terminal Tb qui met en attente le terminal considéré Ta .

Pour mettre en oeuvre le troisième mode de fonctionnement, seconde variante, le terminal de Tb comporte des moyens logiciels pour :
- envoyer à un autre terminal, tel que Ta, un message indiquant à ce terminal Ta qu'il est mis en attente ;
- des moyens pour recevoir une réponse indiquant une option prédéterminée stockée dans cet autre terminal Ta, à appliquer lorsque ce terminal Ta est mis en attente, cette option pouvant être qu'un clip doit être lu localement dans cet autre terminal Ta, ou qu'un clip doit être lu à distance, lorsque cet autre terminal Ta est mis en attente ;
- et des moyens pour commander la lecture d'un clip dans un serveur, Sb, appartenant au même réseau que ce terminal Tb, si l'option prédéterminée est qu'un clip doit être lu à distance, dans le réseau auquel appartient le terminal Tb qui met en attente le terminal considéré Ta .

L'invention est applicable aussi aux terminaux téléphoniques résidentiels utilisant un protocole de signalisation tel que SIP, RNIS, ou H323. Si un tel terminal résidentiel comporte des moyens permettant une mise à jour de son logiciel, il est alors possible d'installer un nouveau logiciel mettant en oeuvre le procédé selon l'invention.

## Revendications

1. Procédé pour lire un clip personnalisé, quand un premier terminal (Ta) est mis en attente par un second terminal (Tb), **caractérisé en ce qu'**il comporte une étape consistant à interroger le premier terminal (Ta) afin de déterminer si le clip doit être lu localement dans le réseau (PNa) auquel appartient le premier terminal (Ta), ou si le clip lu doit être lu à distance, dans le réseau (PNb) auquel appartient le second terminal (Tb).

2. Procédé selon la revendication 1, **caractérisé en ce que**, dans le premier cas, il consiste en outre à interroger le premier terminal (Ta) afin de déterminer si le clip doit être lu dans le premier terminal (Ta), ou si le clip doit être lu dans un serveur (Sa) appartenant au réseau (PNa) auquel appartient le premier terminal (Ta).

3. Procédé selon la revendication 1, **caractérisé en que**, dans le second cas, le clip est lu dans le second terminal (Tb).

4. Procédé selon la revendication 1, **caractérisé en que**, dans le second cas, le clip est lu dans un serveur appartenant à un réseau (PNb) auquel appartient le second terminal (Tb).

5. Terminal de télécommunication (Ta), **caractérisé en ce qu'**il comporte :
- des moyens pour stocker une option prédéterminée, à appliquer lorsque ce terminal (Ta) est mis en attente par un autre terminal (Tb), cette option pouvant être qu'un clip doit être lu localement dans ce terminal (Ta), ou qu'un clip doit être lu à distance, dans le réseau auquel appartient cet autre terminal (Tb) qui met en attente le terminal considéré (Ta) ;
- des moyens pour recevoir un message indiquant à ce terminal (Ta) qu'il est mis en attente ;
- des moyens pour répondre à ce message en indiquant l'option prédéterminée stockée dans ce terminal (Ta) ;
- et des moyens pour lire un clip dans ce terminal (Ta), si l'option prédéterminée est qu'un clip doit être lu localement dans ce terminal (Ta).

6. Terminal de télécommunication (Ta), **caractérisé en ce qu'**il comporte :
- des moyens pour stocker une option prédéterminée, à appliquer lorsque ce terminal (Ta) est mis en attente, cette option pouvant être qu'un clip doit être lu localement dans cet autre terminal (Ta), ou qu'un clip doit être lu à distance, dans le réseau auquel appartient un autre terminal (Tb) qui met en attente le terminal considéré (Ta) ;
- des moyens pour recevoir un message indiquant à ce terminal (Ta) qu'il est mis en attente ;
- des moyens pour répondre à ce message en indiquant l'option prédéterminée stockée dans ce terminal (Ta) ;
- et des moyens pour commander la lecture d'un clip dans un serveur (Sa) appartenant au même réseau que ce terminal (Ta), si l'option prédéterminée indique qu'un clip doit être lu localement dans le réseau (PNa) auquel appartient ce terminal (Ta).

7. Terminal de télécommunication (Tb), **caractérisé en ce qu'**il comporte :
- des moyens pour envoyer à un autre terminal (Ta) un message lui indiquant que cet autre terminal (Ta) est mis en attente ;
- des moyens pour recevoir une réponse indiquant une option prédéterminée stockée dans cet autre terminal (Tb), à appliquer lorsque ce terminal (Ta) est mis en attente, cette option pouvant être qu'un clip doit être lu localement dans cet autre terminal (Ta), ou qu'un clip doit être lu à distance, lorsque cet autre terminal (Ta) est mis en attente ;
- et des moyens pour lire un clip dans ce terminal (Tb), si l'option prédéterminée est qu'un clip doit être lu à distance.

8. Terminal de télécommunication (Tb), **caractérisé en ce qu'**il comporte :
- des moyens pour envoyer à un autre terminal (Ta) un message lui indiquant qu'il est mis en attente ;
- des moyens pour recevoir une réponse indiquant une option prédéterminée stockée dans cet autre terminal (Ta), à appliquer lorsque ce terminal (Ta) est mis en attente, cette option pouvant être qu'un clip doit être lu localement dans cet autre terminal (Ta), ou qu'un clip doit être lu à distance, lorsque cet autre terminal (Ta) est mis en attente ;
- et des moyens pour commander la lecture d'un clip dans un serveur (Sb) appartenant au même réseau que ce terminal (Tb), si l'option prédéterminée est qu'un clip doit être lu à blanc.

## Revendications modifiées

### Revendications modifiées conformément à la règle 86(2) CBE.

**1.** Procédé pour lire un clip personnalisé, quand un premier terminal (Ta) est mis en attente par un second terminal (Tb), **caractérisé en ce qu'**il comporte une étape consistant à interroger le premier terminal (Ta) afin de déterminer si le clip doit être lu localement dans le réseau (PNa) auquel appartient le premier terminal (Ta), ou si le clip lu doit être lu à distance, dans le réseau (PNb) auquel appartient le second terminal (Tb).

**2.** Procédé selon la revendication 1, **caractérisé en ce que**, dans le premier cas, il consiste en outre à interroger le premier terminal (Ta) afin de déterminer si le clip doit être lu dans le premier terminal (Ta), ou si le clip doit être lu dans un serveur (Sa) appartenant au réseau (PNa) auquel appartient le premier terminal (Tα).

**3.** Procédé selon la revendication 1, **caractérisé en que**, dans le second cas, le clip est lu dans le second terminal (Tb).

**4.** Procédé selon la revendication 1, **caractérisé en que**, dans le second cas, le clip est lu dans un serveur appartenant à un réseau (PNb) auquel appartient le second terminal (Tb).

**5.** Terminal de télécommunication (Ta), **caractérisé en ce qu'**il comporte :
- des moyens pour stocker une option prédéterminée, à appliquer lorsque ce terminal (Ta) est mis en attente par un autre terminal (Tb), cette option pouvant être qu'un clip doit être lu localement dans ce terminal (Ta), ou qu'un clip doit être lu à distance, dans le réseau auquel appartient cet autre terminal (Tb) qui met en attente le terminal considéré (Ta) ;
- des moyens pour recevoir un message indiquant à ce terminal (Ta) qu'il est mis en attente ;
- des moyens pour répondre à ce message en indiquant l'option prédéterminée stockée dans ce terminal (Ta).

**6.** Terminal de télécommunication (Ta) selon la revendication 5, **caractérisé en ce qu'**il comporte des moyens pour lire un clip dans ce terminal (Ta), si l'option prédéterminée est qu'un clip doit être lu localement dans ce terminal (Ta).

**7.** Terminal de télécommunication (Ta) selon la revendication 5, **caractérisé en ce qu'**il comporte des moyens pour commander la lecture d'un clip dans un serveur (Sa) appartenant au même réseau que ce terminal (Ta), si l'option prédéterminée indique qu'un clip doit être lu localement dans le réseau (PNa) auquel appartient le terminal considéré (Ta).

**8.** Terminal de télécommunication (Tb), **caractérisé en ce qu'**il comporte :
- des moyens pour envoyer à un autre terminal (Ta) un message lui indiquant que cet autre terminal (Ta) est mis en attente ;
- des moyens pour recevoir une réponse indiquant une option prédéterminée stockée dans cet autre terminal (Ta), à appliquer lorsque cet autre terminal (Ta) est mis en attente, cette option pouvant être qu'un clip doit être lu localement dans cet autre terminal (Ta), ou qu'un clip doit être lu à distance, lorsque cet autre terminal (Ta) est mis en attente.

**9.** Terminal de télécommunication (Tb) selon la revendication 8, **caractérisé en ce qu'**il comporte des moyens pour lire un clip dans le terminal considéré (Tb), si l'option prédéterminée est qu'un clip doit être lu à distance.

**10.** Terminal de télécommunication (Tb) selon la revendication 8, **caractérisé en ce qu'**il comporte des moyens pour commander la lecture d'un clip dans un serveur (Sb) appartenant au même réseau que le terminal considéré (Tb), si l'option prédéterminée est qu'un clip doit être lu à distance.
